# EUROPÄISCHE PATENTSCHRIFT

(11) **EP 1 131 218 B1**
(45) Veröffentlichungstag und Bekanntmachung des Hinweises auf die Patenterteilung: **30.08.2006**
(21) Anmeldenummer: 00967653.7
(22) Anmeldetag: 08.09.2000
(51) Int. Cl.: B60J 10/00, B60J 10/10

(54) **FENSTERDICHTUNGSPROFIL FÜR EIN KABRIOLETT**
WINDOW SEAL FOR A CONVERTIBLE
JOINT D'ETANCHEITE PROFILE DESTINE A UNE FENETRE DE CABRIOLET

(30) Priorität: 17.09.1999 DE 29916383 U
(43) Veröffentlichungstag der Anmeldung: 12.09.2001
(73) Patentinhaber: Meteor Gummiwerke K.H. Bädje GmbH & Co. KG, 31167 Bockenem (DE)
(72) Erfinder: ANDERS, Jens, 31094 Marienhagen (DE); GENTEMANN, Martin, 31177 Harsum (DE)
(74) Vertreter: Sobisch, Peter
(86) Internationale Anmeldenummer: PCT/EP2000/008764
(87) Internationale Veröffentlichungsnummer: WO 2001/021425

(56) Entgegenhaltungen:
- EP-A- 0 581 389
- WO-A-97/00180
- DE-A- 4 314 192
- US-A- 5 527 583

## Beschreibung

Die Erfindung betrifft ein Dichtungsprofil nach dem Oberbegriff des Anspruchs 1.

Bei einem bekannten gattungsgemäßen Dichtungsprofil dieser Art (WO 97/00180 A1; Fig. 2, 3, 6 und 7) tritt die Fensterscheibe mit zwei gegenüberliegenden Dichtlippen in Berührung. Die Dichtlippen bilden Längskanten des Elastomerprofilstrangs. Die Befestigungselemente durchdringen den Elastomerprofilstrang und die Trägerschiene und werden durch die Dichtlippen hindurch an dem Anschlußteil montiert. Oberhalb der Dichtlippen kann sich innerhalb des Dichtungsprofils in unerwünschter Weise Staub und/oder Feuchtigkeit ansammeln. Außerdem muß das Dichtungsprofil in Abschnitte abgelängt und jeder Abschnitt mit aufwendigen Werkzeugen in die benötigte dreidimensionale Form streckgebogen werden.

Es ist an sich bekannt, eine Halteschiene als Aluminium-Strangpreßprofil herzustellen, durch Streckbiegen in die gewünschte dreidimensionale Form zu bringen und mit Befestigungselementen an dem Anschlußteil zu befestigen. Erst danach wird an der Kfz-Montagelinie der Elastomerprofilstrang in beidseitige Aufnahmen der Halteschiene eingesetzt. Dies ist zeit- und kostenaufwendig.

Aus der US 55 27 583 A (Fig. 12A und 12B) ist an sich ein Dichtungsprofil zur Abdichtung einer heb- und senkbaren seitlichen Fensterscheibe gegenüber einem Dachrahmen einer Limousine bekannt, wobei ein Dichtungsgummi auf eine Steckschiene eines Formteils aufgeschoben und mittels beidseitigem Klebeband an diesem befestigt ist. Das Formteil weist zur Befestigung an dem Dachrahmen Lappen auf, welche nicht über den Dichtungsgummi herausragen, so daß zunächst das Formteil und anschließend in einem weiteren Arbeitsgang der Dichtungsgummi angebracht werden muß.

Ferner ist an sich aus der DE 693 11 456 T2 (Fig. 7) eine Verkleidungs-Baugruppe für Kraftfahrzeugtüren bekannt mit Dichtungsprofilen zur Abdichtung einer heb- und senkbaren seitlichen Fensterscheibe gegenüber der Tür, wobei Lappen zur Befestigung einer ein Dichtungsprofil aufnehmenden Strebe an einer Türinnenwand vorgesehen sind. Diese Lappen sind somit nicht Teil einer zur Armierung und Fixierung dienenden Trägerschiene des Dichtungsprofils.

Der Erfindung liegt die Aufgabe zugrunde, das Dichtungsprofil und seine Montage zu vereinfachen und zu verbessern.

Diese Aufgabe ist durch die Merkmale des Anspruchs 1 gelöst. Das zu dem Dachrahmen gehörende Dach kann ein Faltverdeck oder ein mehrteiliges, festes Klappdach sein. Der Dachrahmen kann gegebenenfalls auch die A-Säule des Kabrioletts umfassen. Die Trägerschiene besteht vorzugsweise aus Blech und ist z.B. aus Aluminium, Stahl oder nichtrostendem Stahl gefertigt. Der Elastomerprofilstrang ist gegebenenfalls aus mehreren unterschiedlichen Elastomeren koextrudiert. Vorzugsweise wird das Dichtungsprofil so hergestellt, daß zunächst die bandförmige, ebene Trägerschiene in den Elastomerprofilstrang einextrudiert wird. Dabei steht allerdings ein die Montagebereiche enthaltender Streifen der Trägerschiene seitlich aus dem Elastomerprofilstrang heraus. Dieser Streifen wird nach der Koextrusion so gestanzt, daß die Montagebereiche stehenbleiben und gleichzeitig für die Aufnahme der Befestigungselemente gelocht werden. Bei Bedarf können die Montagebereiche ferner in die endgültige Montageiage gebogen werden. Ein Streckbiegen des so fertiggestellten Dichtungsprofils entfällt. Vielmehr wird das Dichtungsprofil über die Montagebereiche sogleich an dem Anschlußteil des Dachrahmens befestigt. Dank der Ausstanzungen neben den Montagebereichen ist das Dichtungsprofil dabei um eine Querachse herum sehr leicht in eine endgültige dreidimensionale Form biegbar und in dieser Form am Anschlußteil montierbar.

Der Montageaufwand am Fertigungsband der Kabrioletts wird erheblich reduziert. Außerdem entfallen die bisher erforderlichen, erheblichen Kosten für das Streckbiegen.

Die Merkmale des Anspruchs 2 führen zu einer schnellen und genauen Herausarbeitung der Montagebereiche aus dem bei der Koextrusion von Elastomermaterial freigelassenen Randstreifen der Trägerschiene.

Gemäß Anspruch 3 lassen sich die Montagebereiche in jede beliebige, für die Montage günstige Stellung biegen.

Durch die Merkmale des Anspruchs 4 kann der Fuß besonders gut und definiert in Dichtanlage an dem Anschlußteil gehalten werden.

Gemäß Anspruch 5 oder 6 steht ein ausreichend steifer Randflansch zur sicheren Halterung des Fußes zur Verfügung.

Die Merkmale des Anspruchs 7 verbessern die Abdichtung des zugehörigen Spalts gegen Feuchtigkeit und Geräusche.

Gemäß Anspruch 8 entsteht in dem Elastomerprofilstrang ein Hohlraum, in den die Fensterscheibe beim Schließen teilweise eintaucht. Da dieser Hohlraum normalerweise hermetisch abgedichtet ist, kann weder Staub noch Feuchtigkeit in den Hohlraum eindringen und nachteilig auf die Fensterscheibe einwirken.

Gemäß Anspruch 9 ergibt sich eine gute Abdichtung zwischen der geschlossenen Fensterscheibe und der Membran.

Gemäß Anspruch 10 kann der Weichgummi z.B. eine Härte von 60 Shore A und der Moosgummi eine Härte von z.B. 15 Shore A aufweisen. Weichgummi und Moosgummi werden vorzugsweise im Duplexverfahren gemeinsam mit der Trägerschiene koextrudiert.

Die Merkmale des Anspruchs 11 dienen der Versteifung des Fußes und fördern die Dichtanlage des Fußes an dem Anschlußteil.

Gemäß Anspruch 12 ergibt sich eine Versteifung des Schenkels und ein entsprechend erhöhter Verformungswiderstand des Schenkels, wenn die Fensterscheibe in den Hohlraum des Elastomerprofilstrangs eintaucht.

Die Merkmale des Anspruchs 13 gestatten eine Biegung des Dichtungsprofils auch um eine Hochachse, wenn die Einbausituation dies erfordert. Die Aussparungen werden zweckmäßigerweise schon vor der Koextrusion in der Längskante der Trägerschiene angebracht.

Diese und weitere Vorteile und Merkmale der Erfindung werden nachfolgend anhand der in den Zeichnungen dargestellten Ausführungsbeispiele näher erläutert. Es zeigt:
Fig. 1 schematisch den Dachbereich eines Kabrioletts mit Faltverdeck,
Fig. 2 schematisch den Dachbereich eines Kabrioletts mit festem Klappdach,
Fig. 3 die Schnittansicht nach Linie III-III in Fig. 2 in vergrößerter Darstellung,
Fig. 4 eine perspektivische Darstellung des Dichtungsprofils gemäß Fig. 3 in verkleinerter Darstellung,
Fig. 5 eine der Fig. 3 entsprechende Schnittansicht durch eine andere Ausführungsform des Dichtungsprofils,
Fig. 6 eine perspektivische Darstellung des Dichtungsprofils gemäß Fig. 5 in verkleinerter Darstellung,
Fig. 7 den Querschnitt gemäß Linie VII-VII in Fig. 1 in vergrößerter Darstellung und
Fig. 8 und 9 jeweils die Draufsicht auf unterschiedliche Trägerschienen.

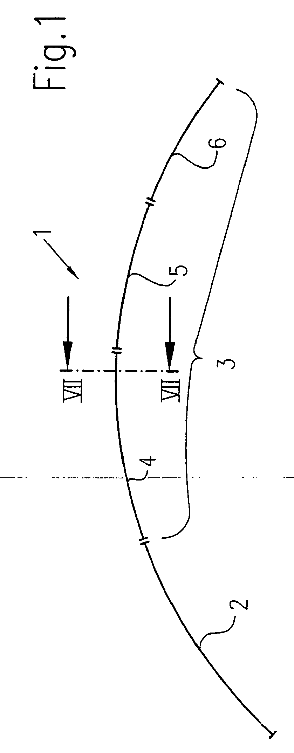

In Fig. 1 weist ein Dachrahmen 1 eines Kabrioletts in schematischer Darstellung eine A-Säule 2 sowie ein dreiteiliges Faltverdeck 3 mit einem Dachrahmen I 4, einem Dachrahmen II 5 und einem Dachrahmen III 6 auf.

In allen Zeichnungsfiguren sind gleiche Teile mit gleichen Bezugszahlen versehen.

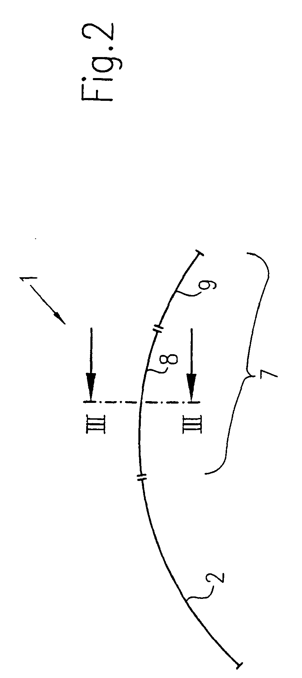

Fig. 2 zeigt den Dachrahmen 1 eines Kabrioletts, der die A-Säule 2 sowie ein zweiteiliges festes Klappdach 7 mit einem Dachrahmen 18 und einem Dachrahmen 119 aufweist.

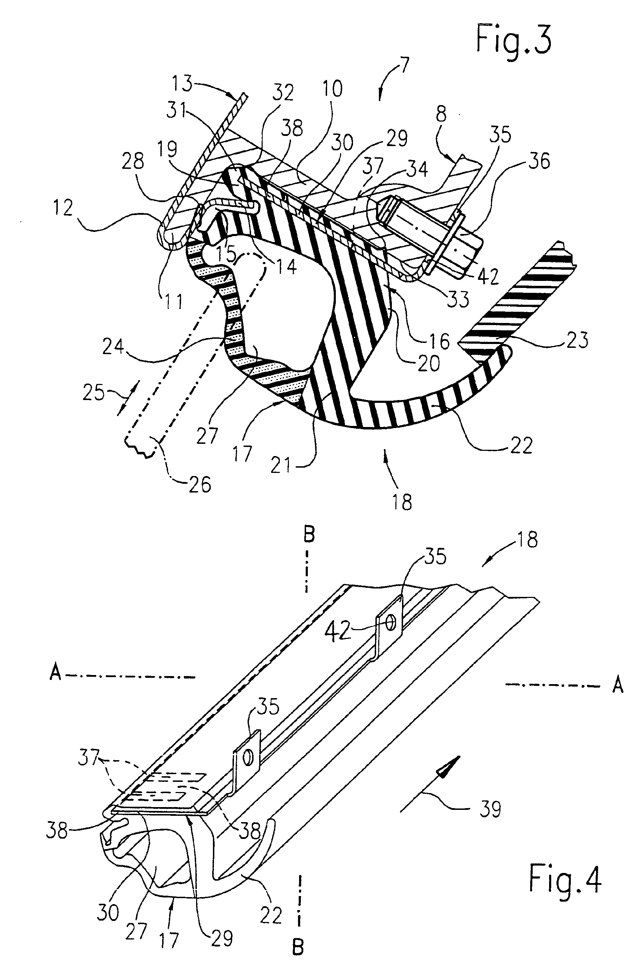

Gemäß Fig. 3 ist der Dachrahmen 18 mit einem dreidimensional geformten Anschlußteil 10 versehen, das z.B. aus Aluminiumguß besteht. Um einen Flansch 11 des Anschlußteils 10 ist ein lackiertes, sichtbares Außenblech 12 eines zugehörigen Dachteils 13 des Klappdachs 7 herumgebördelt. Das Außenblech 12 weist einen nach innen abgebogenen, formstabilen Randflansch 14 auf, der in eine Längsnut 15 in einem Fuß 16 eines Elastomerprofilstrangs 17 eines Dichtungsprofils 18 eingreift.

Das Außenblech 12 kann z.B. mit dem Flansch 11 verklebt sein. Die Längsnut 15 ist in einer ersten Längskante 19 des Fußes 16 ausgebildet. Von einer gegenüberliegenden zweiten Längskante 20 des Fußes 16 erstreckt sich ein Schenkel 21 des Elastomerprofilstrangs 17 unter einem Winkel von etwa 90° nach außen. An die freie Längskante des Schenkels 21 ist eine Abdecklippe 22 angeformt, die mit einer am Ende zu montierenden Innenverkleidung 23 des Dachteils 13 zusammenwirkt. Der Fuß 16, der Schenkel 21 und die Abdecklippe 22 bestehen aus Weichgummi. Zwischen der freien Längskante des Schenkels 21 und der ersten Längskante 19 des Fußes 16 ist eine Membran 24 des Elastomerprofilstrangs 17 befestigt. Die Membran 24 besteht in diesem Fall aus Moosgummi und wirkt mit einer in den Richtungen des Doppelpfeils 25 heb- und senkbaren seitlichen Fensterscheibe 26 des Kabrioletts abdichtend zusammen. In Fig. 3 ist die Fensterscheibe 26 strichpunktiert in ihrer geschlossenen Endstellung gezeichnet, während die Membran 24 noch in ihrer unbelasteten Ausgangsstellung dargestellt ist. Im Inneren des Elastomerprofilstrangs 17 besteht ein Hohlraum 27. An die erste Längskante 19 des Fußes 16 ist außerhalb der Längsnut 15 eine unter Vorspannung abdichtend an dem Außenblech 12 und/oder an dessen Randflansch 14 anliegende Dichtlippe 28 angeformt. Die Dichtlippe 28 besteht ebenfalls aus Weichgummi.

Mit dem Elastomerprofilstrang 17 ist durch Koextrusion eine aus Blech bestehende Trägerschiene 29 verbunden. Gemäß Fig. 3 ist ein Teil 30 der Trägerschiene 29 in den Fuß 16 eingeformt und erstreckt sich bis in eine Dichtkante 31 an der ersten Längskante 19 des Fußes 16. Die Dichtkante 31 liegt unter Vorspannung einerseits an dem Randflansch 14 und andererseits mit einer Dichtrippe 32, ebenfalls unter Vorspannung, an einer Dichtfläche 33 des Anschlußteils 10 an. Durch den Randflansch 14 werden die Dichtkante 31 und die Dichtrippe 32 in gut dichtender Anlage an der Dichtfläche 33 gehalten. An seiner zweiten Längskante 20 wird der Fuß 16 mit einer Dichtrippe 34 in besonders starke Dichtberührung mit der Dichtfläche gebracht. Dies geschieht dadurch, daß lappenartig ausgebildete Montagebereiche 35 der Trägerschiene 29, die aus dem Fuß 16 herausragen, im Fall der Fig. 3 um 90° abgewinkelt und über als Schrauben ausgebildete Befestigungselemente 36 mit dem Anschlußteil 10 verschraubt sind. Jede Schraube 36 durchdringt eine Bohrung 42 in dem zugehörigen Montagebereich 35. Zwischen der Schraube 36 und der Bohrung 42 besteht ein radiales Spiel, das bei der Montage zur Einstellung des Dichtungsprofils 18 relativ zu dem Anschlußteil 10 verwendet werden kann.

Die Trägerschiene 29 ist an ihrer in dem Elastomerprofilstrang 17 angeordneten Längskante mit Aussparungen 37 versehen.

In Fig. 4 sind zwei dieser Aussparungen 37 als Beispiele gestrichelt eingetragen. Die Aussparungen 37 sind im Wechsel mit Zungen 38 des Teils 30 über die gesamte Länge des Teils 30 in einer Längsrichtung 39 (Fig. 4) des Dichtungsprofils 18 angeordnet.

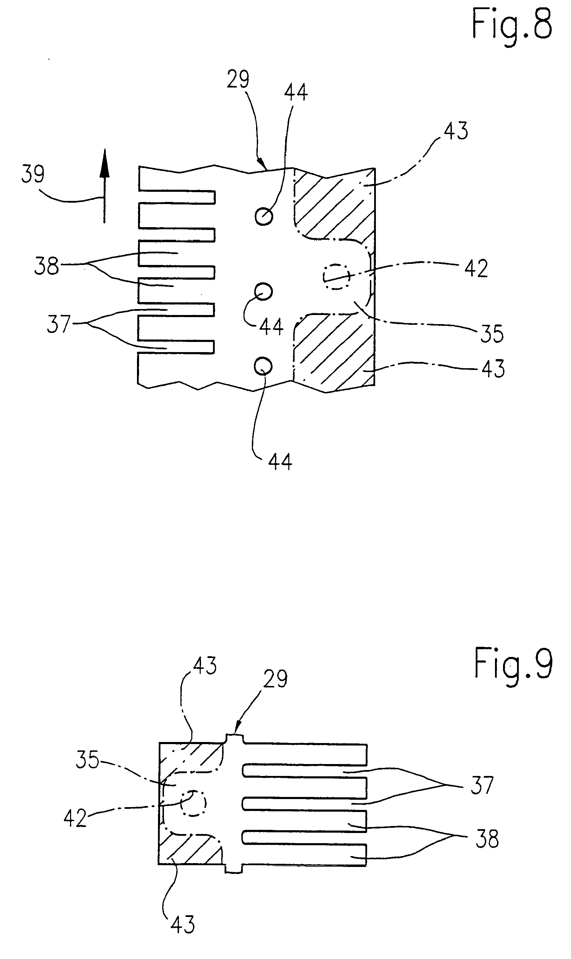

Wie Fig. 4 zeigt, ist das ursprünglich in der Längsrichtung 39 neben den Montagebereichen 35, 35 angeordnete Material 43 (Fig. 8) der Trägerschiene 29 entfernt, z.B. herausgestanzt. Dadurch kann das Dichtungsprofil 18 verhältnismäßig leicht um eine waagerechte Querachse A-A zur Anpassung an die Einbausituation gebogen werden. Andererseits gestatten die Aussparungen 37 eine verhältnismäßig einfache Biegung des Dichtungsprofils 18 um eine Hochachse B-B. Dabei sind die Aussparungen 37 nur dann erforderlich, wenn letztlich das Dichtungsprofil 18 während der Montage auch um die Hochachse B-B gebogen werden muß.

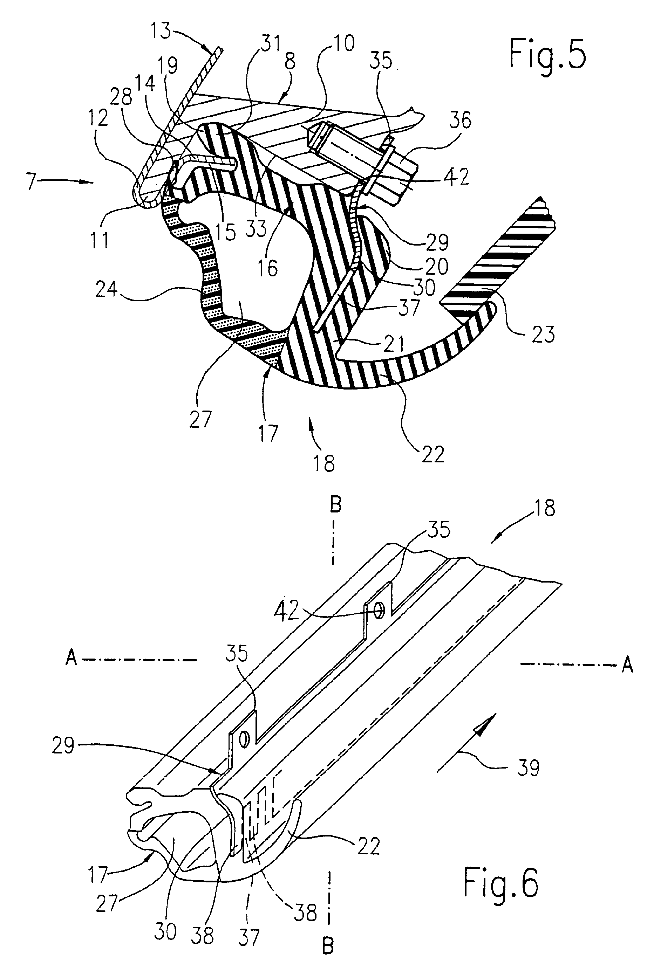

Die in den Fig. 5 und 6 dargestellte Ausführungsform unterscheidet sich gegenüber derjenigen in den Fig. 3 und 4 vor allem dadurch, daß die Trägerschiene 29 sich nicht mehr in den Fuß 16, sondern in den Schenkel 21 erstreckt. Auch hier können bei Bedarf Aussparungen 37 im Wechsel mit Zungen 38 an der Längskante des Teils 30 der Trägerschiene 29 vorgesehen sein. Die Bohrungen 42 weisen hier praktisch kein radiales Spiel zu der Schraube 36 auf, wodurch die Montage des Dichtungsprofils 18 vereinfacht wird.

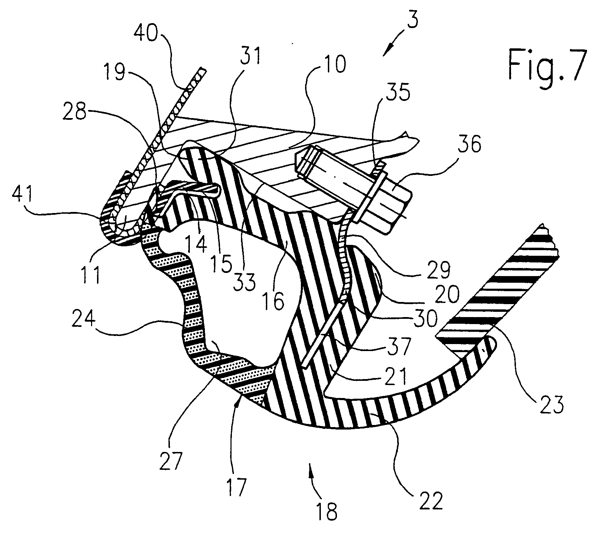

Die Ausführungsform gemäß Fig. 7 ähnelt derjenigen gemäß den Fig. 5 und 6. Allerdings zeigt Fig. 7 einen Querschnitt durch den Dachrahmen 14 des Faltverdecks 3 gemäß Fig. 1.

Eine Längskante eines Verdeckstoffs 40 ist um den Flansch 11 herumgezogen und in dieser Position durch eine aus Kunststoff gefertigte Abschlußleiste 41 gehalten. Die Abschlußleiste 41 kann mit dem Verdeckstoff 40 z.B. vernäht sein. Hier wirkt die Dichtlippe 28 abdichtend mit der Abschlußleiste 41 zusammen. Der Randflansch 14 ist einstückig mit der Abschlußleiste 41 ausgebildet.

Fig. 8 zeigt die Draufsicht auf die gemäß den Fig. 3 und 4 verwendete Trägerschiene 29. Die Trägerschiene 29 ist in diesem Zustand noch eben und weist die mit voll ausgezogenen Linien dargestellte Kontur auf. Es sind also schon die Aussparungen 37 und Umspritzungslöcher 44 vorhanden, bevor die Trägerschiene 29 in dieser Form in den Spritzkopf eines Extruders zur Koextrusion mit dem Dichtungsprofil 18 eingeführt wird. Vorzugsweise erst nach dieser Koextrusion wird die in Fig. 8 rechts strichpunktiert angedeutete Konfiguration der Trägerschiene 29 hergestellt. Dabei wird das in Längsrichtung 39 neben den Montagebereichen 35 angeordnete Material 43 und gleichzeitig die Bohrungen 42 ausgestanzt. Schließlich werden die Montagebereiche 35 noch um etwa 90° gegenüber dem Reste der Trägerschiene 29 abgebogen, wie dies aus den Fig. 3 und 4 ersichtlich ist.

Fig. 9 zeigt die Draufsicht auf eine Trägerschiene 29, wie sie gemäß den Fig. 5 bis 7 verwendbar ist. Bezüglich der Herstellung und Verarbeitüng dieser Trägerschiene 29 gilt im wesentlichen das gleiche wie zu Fig. 8 ausgeführt.

## Patentansprüche

1. Dichtungsprofil (18) zur Abdichtung einer heb- und senkbaren seitlichen Fensterscheibe (26) gegenüber einem Dachrahmen (1) eines Kabrioletts,
wobei das Dichtungsprofil (18) eine metallische Trägerschiene (29) und einen mit der Trägerschiene (29) koextrudierten Elastomerprofilstrang (17) aufweist,
und wobei das Dichtungsprofil (18) dreidimensional geformt und an Anschlußteilen (10) des Dachrahmens (1) mit Befestigungselementen (36) festlegbar ist,
**dadurch gekennzeichnet, daß** wenigstens zwei in Längsrichtung (39) des Dichtungsprofils (18) im Abstand voneinander angeordnete, mit den Befestigungselementen (36) zusammenwirkende Montagebereiche (35) der Trägerschiene (29) aus dem Elastomerprofilstrang (17) quer zu der Längsrichtung (39) herausragen.

2. Dichtungsprofil nach Anspruch 1,
**dadurch gekennzeichnet, daß** das ursprünglich in der Längsrichtung (39) neben den Montagebereichen (35) angeordnete Material (43) der Trägerschiene (29) entfernt, z.B. herausgestanzt, ist.

3. Dichtungsprofil nach Anspruch 1 oder 2,
**dadurch gekennzeichnet, daß** die Montagebereiche (35) relativ zu dem Rest der Trägerschiene (29) in eine für die Montage günstige Stellung gebogen sind.

4. Dichtungsprofil nach einem der Ansprüche 1 bis 3,
**dadurch gekennzeichnet, daß** der Elastomerprofilstrang (17) einen mit dem Anschlußteil abdichtend zusammenwirkenden Fuß (16) aufweist,
daß der Fuß (16) an einer von den Montagebereichen (35) abgewandten ersten Längskante (19) eine Längsnut (15) aufweist,
und daß in die Längsnut (15) ein formstabiler Randflansch (14) eines Daches des Kabrioletts eingreift.

5. Dichtungsprofil nach Anspruch 4,
**dadurch gekennzeichnet, daß** der Randflansch (14) ein Bestandteil eines Außenblechs (12) eines Dachteils (13) eines festen Klappdaches (7) ist.

6. Dichtungsprofil nach Anspruch 4,
**dadurch gekennzeichnet, daß** der Randflansch (14) ein Bestandteil einer Abschlußleiste (41) ist,
und daß mit der Abschlußleiste (41) eine Längskante eines Verdeckstoffs (40) eines Faltverdecks (3) an dem zugehörigen Anschlußteil (10) des Dachrahmens (1) fixiert ist.

7. Dichtungsprofil nach einem der Ansprüche 4 bis 6,
**dadurch gekennzeichnet, daß** der Fuß (16) außerhalb der Längsnut (15) eine unter Vorspannung abdichtend an dem Dach anliegende Dichtlippe (28) aufweist.

8. Dichtungsprofil nach einem der Ansprüche 4 bis 7,
**dadurch gekennzeichnet, daß** sich von einer den Montagebereichen (35) benachbarten zweiten Längskante (20) des Fußes (16) ein Schenkel (21) des Elastomerprofilstrangs (17) unter einem Winkel nach außen erstreckt,
und daß zwischen einer freien Längskante des Schenkels (21) und der ersten Längskante (19) des Fußes (16) eine Membran (24) des Elastomerprofilstrangs (17) befestigt ist und einen Hohlraum (27) in dem Elastomerprofilstrang (17) schafft.

9. Dichtungsprofil nach Anspruch 8,
**dadurch gekennzeichnet, daß** die Fensterscheibe (26) in ihrem obersten Wegbereich in dichtende Berührung mit der Membran (24) tritt.

10. Dichtungsprofil nach Anspruch 8 oder 9,
**dadurch gekennzeichnet, daß** der Fuß (16) und der Schenkel (21) aus Weichgummi und die Membran (24) aus Moosgummi bestehen.

11. Dichtungsprofil nach einem der Ansprüche 1 bis 10,
**dadurch gekennzeichnet, daß** die Trägerschiene (29) sich in einen mit dem Anschlußteil (10) abdichtend zusammenwirkenden Fuß (16) des Elastomerprofilstrangs (17) erstreckt.

12. Dichtungsprofil nach einem der Ansprüche 8 bis 10,
**dadurch gekennzeichnet, daß** die Trägerschiene (29) sich in den Schenkel (21) des Elastomerprofilstrangs (17) erstreckt.

13. Dichtungsprofil nach einem der Ansprüche 1 bis 12,
**dadurch gekennzeichnet, daß** die Trägerschiene (29) an ihrer in dem Elastomerprofilstrang (17) angeordneten Längskante mit Aussparungen (37) versehen ist.

## Claims

1. Profiled seal (18) for providing a sealing arrangement between a vertically sliding side window pane (26) and a roof frame (1) of a cabriolet,
wherein the profiled seal (18) comprises a metal carrier rail (29) and a length of profiled elastomer (17) which is co-extruded with the carrier rail (29),
and wherein the profiled seal (18) has a three-dimensional shape and can be fixed on connection parts (10) of the roof frame (1) by attachment elements (36),
**characterized in that** at least two assembly regions (35) of the carrier rail (29) protrude out of the length of profiled elastomer (17) transverse to the longitudinal direction (39), which assembly regions are disposed at a mutually spaced disposition in the longitudinal direction (39) of the profiled seal (18) and cooperate with the attachment elements (36).

2. Profiled seal as claimed in claim 1,
**characterized in that** the material (43) of the carrier rail (29) is removed, for example punched out, which material is originally disposed in the longitudinal direction (39) adjacent to the assembly regions (35).

3. Profiled seal as claimed in claim 1 or 2,
**characterized in that** the assembly regions (35) are bent relative to the remainder of the carrier rail (29) in a position which is favourable for the assembly process.

4. Profiled seal as claimed in any one of claims 1 to 3,
**characterized in that** the length of profiled elastomer (17) comprises a foot (16) which cooperates in a sealing manner with the connection part,
that the foot (16) comprises a longitudinal groove (15) on a first longitudinal edge (19) remote from the assembly regions (35),
and that a dimensionally stable edge flange (14) of a roof of the cabriolet engages in the longitudinal groove (15).

5. Profiled seal as claimed in claim 4,
**characterized in that** the edge flange (14) is a component of an outer metal sheet (12) of a roof part (13) of a folding hardtop (7).

6. Profiled seal as claimed in claim 4,
**characterized in that** the edge flange (14) is a component of a closure strip (41),
and that a longitudinal edge of a cover material (40) of a folding roof cover (3) is fixed on the associated connection part (10) of the roof frame (1) by means of the closure strip (41).

7. Profiled seal as claimed in any one of claims 4 to 6,
**characterized in that** the foot (16) comprises outside the longitudinal groove (15) a sealing lip (28) which lies under pretensioning in a sealing manner against the roof.

8. Profiled seal as claimed in any one of claims 4 to 7,
**characterized in that** a limb (21) of the length of profiled elastomer (17) extends outwards at an angle from a second longitudinal edge (20) of the foot (16) adjacent to the assembly regions (35),
and that a membrane (24) of the length of profiled elastomer (17) is attached between a free longitudinal edge of the limb (21) and the first longitudinal edge (19) of the foot (16) and forms a hollow cavity (27) in the length of profiled elastomer (17).

9. Profiled seal as claimed in claim 8,
**characterized in that** the window pane (26) comes into sealing contact with the membrane (24) when the pane is in the uppermost region of its travel.

10. Profiled seal as claimed in claim 8 or 9,
**characterized in that** the foot (16) and the limb (21) consist of soft rubber and the membrane (24) consists of expanded rubber.

11. Profiled seal as claimed in any one of claims 1 to 10,
**characterized in that** the carrier rail (29) extends in a foot (16) of the length of profiled elastomer (17), which foot cooperates in a sealing manner with the connection part (10).

12. Profiled seal as claimed in any one of claims 8 to 10,
**characterized in that** the carrier rail (29) extends in the limb (21) of the length of profiled elastomer (17).

13. Profiled seal as claimed in any one of claims 1 to 12,
**characterized in that** the carrier rail (29) is provided with cut-outs (37) on its longitudinal edge disposed in the length of profiled elastomer (17).

## Revendications

1. Profilé d'étanchéité (18) pour assurer l'étanchéité d'une vitre de fenêtre latérale (26) escamotable, par rapport à un bâti de toit (1) d'un cabriolet,
le profilé d'étanchéité (18) comportant un rail support (29) métallique et un profilé élastomère (17) coextrudé avec le rail support (29),
et le profilé d'étanchéité (18) ayant une forme tridimensionnelle et pouvant être fixé par des éléments de fixation (36) contre des éléments d'assemblage (10) du bâti du toit (1),
**caractérisé en ce qu'**au moins deux zones de montage (35) du rail profilé (29), agencées à distance l'une de l'autre dans le sens longitudinal (39) du profilé d'étanchéité (18) et coopérant avec les éléments de fixation (36), s'avancent en saillie hors du profilé élastomère (17) transversalement par rapport au sens longitudinal (39).

2. Profilé d'étanchéité selon la revendication 1, **caractérisé en ce que** la matière (43) du rail support (29), située à l'origine à côté des zones de montage (35) dans le sens longitudinal (39), est enlevée, par exemple par découpage.

3. Profilé d'étanchéité selon la revendication 1 ou 2, **caractérisé en ce que** les zones de montage (35) sont pliées par rapport au reste du rail support (29) dans une position favorable pour le montage.

4. Profilé d'étanchéité selon l'une quelconque des revendications 1 à 3, **caractérisé en ce que** le profilé élastomère (17) comporte une base (16) coopérant de manière étanche avec l'élément d'assemblage, **en ce que** la base (16) comporte une rainure longitudinale (15) sur un premier bord longitudinal (19) opposé aux zones de montage (35), et **en ce qu'**un collet (14), de forme stable, d'un toit de cabriolet s'engage dans la rainure longitudinale (15).

5. Profilé d'étanchéité selon la revendication 4, **caractérisé en ce que** le collet (14) est une partie intégrante d'une tôle extérieure (12) d'un élément de toit (13) d'un toit rigide escamotable (7).

6. Profilé d'étanchéité selon la revendication 4, **caractérisé en ce que** le collet (14) est une partie intégrante d'une rive de finition (41),
et **en ce qu'**un bord longitudinal d'un textile de recouvrement (40) d'une capote (3) est fixé avec la rive de finition (41) contre l'élément d'assemblage (10) correspondant du bâti de toit (1).

7. Profilé d'étanchéité selon l'une quelconque des revendications 4 à 6, **caractérisé en ce que** la base (16), en dehors de la rainure longitudinale (15), comporte une lèvre d'étanchéité (28) en appui de manière étanche sous précontrainte contre le toit.

8. Profilé d'étanchéité selon l'une quelconque des revendications 4 à 7, **caractérisé en ce qu'**une branche (21) du profilé élastomère (17) s'étend en formant un angle vers l'extérieur à partir d'un deuxième bord longitudinal (20) de la base (16), adjacent aux zones de montage (35), et **en ce qu'**une membrane (24) du profilé élastomère (17) est fixée entre un bord longitudinal libre de la branche (21) et le premier bord longitudinal (19) de la base (16) et crée une cavité (27) à l'intérieur du profilé élastomère (17).

9. Profilé d'étanchéité selon la revendication 8, **caractérisé en ce que** la vitre (26) dans la partie supérieure de son déplacement entre en contact étanche avec la membrane (24).

10. Profilé d'étanchéité selon la revendication 8 ou 9, **caractérisé en ce que** la base (16) et la branche (21) sont réalisées en caoutchouc mou et la membrane (24) est réalisée en caoutchouc mousse.

11. Profilé d'étanchéité selon l'une quelconque des revendications 1 à 10, **caractérisé en ce que** le rail support (29) s'étend dans une base (16) du profilé élastomère (17), laquelle coopère de manière étanche avec l'élément d'assemblage (10).

12. Profilé d'étanchéité selon l'une quelconque des revendications 8 à 10, **caractérisé en ce que** le rail support (29) s'étend dans la branche (21) du profilé élastomère (17).

13. Profilé d'étanchéité selon l'une quelconque des revendications 1 à 12, **caractérisé en ce que** le rail support (29) comporte des évidements (37) sur son bord longitudinal monté dans le profilé élastomère (17).
